# EUROPEAN PATENT APPLICATION

(11) **EP 2 669 600 A2**
(43) Date of publication of application: **04.12.2013**
(21) Application number: 13170014.8
(22) Date of filing: 31.05.2013
(51) Int. Cl.: F25B 5/04, F25B 30/06, F25B 27/00, F25B 43/00

(54) **Air source heat pump system with a low pressure receiver**

(30) Priority: 01.06.2012 GB 201209817
(71) Applicant: TEV Limited, Brighouse, Yorkshire HD6 1QF (GB)
(72) Inventor: Chisman, Christopher, Brighouse, Yorkshire HD6 1QF (GB)
(74) Representative: Jackson, Derek Charles

(57) **Abstract**

An air source heat pump system comprises tubing providing a refrigerant circuit (18); a compressor (27) for compressing the refrigerant; a condenser (28) for cooling the refrigerant; and an expansion device (29) configured to reduce the pressure of the refrigerant. The system also comprises a first evaporator part (26); a second evaporator part (35); and a receiver (34) configured to connect the first evaporator part and the second evaporator part. The receiver is configured to allow gas phase refrigerant to enter the first evaporator part from the receiver and liquid phase refrigerant to enter the second evaporator part from the receiver.

## Description

This invention relates to an air source heat pump system with a low pressure receiver. In particular, the invention relates to an air source heat pump system comprising a first evaporator part and a second evaporator part.

Current domestic hot water (DHW) systems and space heating (SH) systems utilise a variety of renewable energy technologies. For example, solar thermal collectors are mostly used for DHW purposes, but are sometimes also used for SH purposes. Air source heat pumps are mostly used for SH purposes.

A solar thermal collector can be in the form of a solar hot water panel designed to collect heat by absorbing sunlight. There are two types of solar thermal collectors: flat plate collectors and evacuated tube solar collectors.

Flat plate collectors consist of a dark flat-plate absorber of solar energy, a transparent cover such as glass that allows solar energy to pass through but reduces heat losses, a heat transfer fluid (HTF) such as water to remove heat from the absorber, and a heat insulating backing. Generally, the absorber consists of a thin absorber sheet of thermally stable polymers, aluminium, steel or copper, to which a matt black or selective coating is applied.

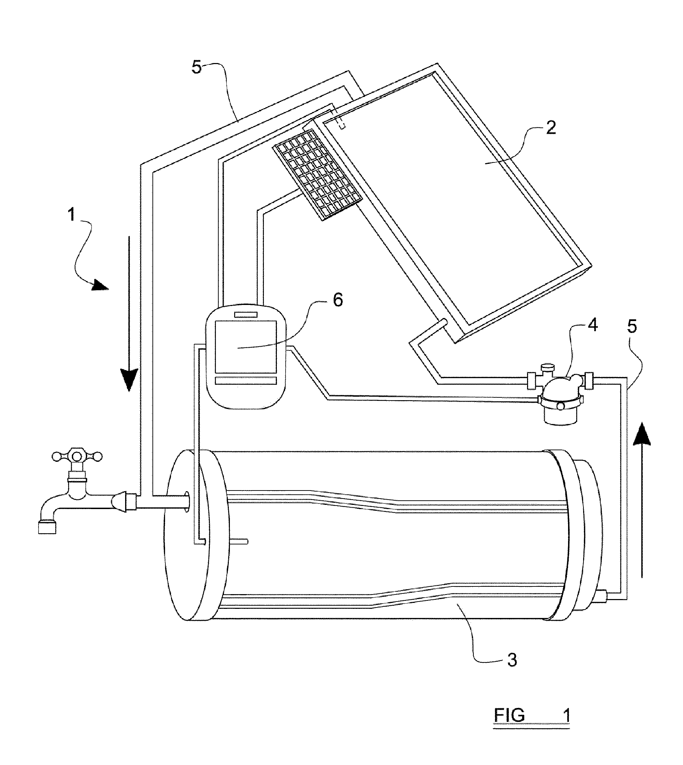

Figure 1 shows a known solar thermal system 1 comprising a flat plate collector 2. In such systems, a large storage tank 3 is ground- or floor-mounted and is below the level of the collector 2 and the HTF is usually circulated using a circulating pump 4 through tubing 5 to transfer heat from the absorber to the storage tank 3. Usually, an additional heat source such as an oil, gas or electric heater is also provided in the storage tank 3 for use, for example in winter, when there is not sufficient solar heat gain to deliver the required amount of hot water. Typically, a programmable differential controller 6 may be used to control the system.

An air source heat pump (ASHP) is a heating and cooling system that uses outside air as its heat source and heat sink. In accordance with the principles of vapor compression refrigeration, an ASHP uses a circulating liquid refrigerant as the medium which absorbs and removes heat from the space to be cooled and subsequently rejects that heat elsewhere. In domestic heating use, an ASHP absorbs heat from outside air and releases it inside during winter, and can often do the converse in summer.

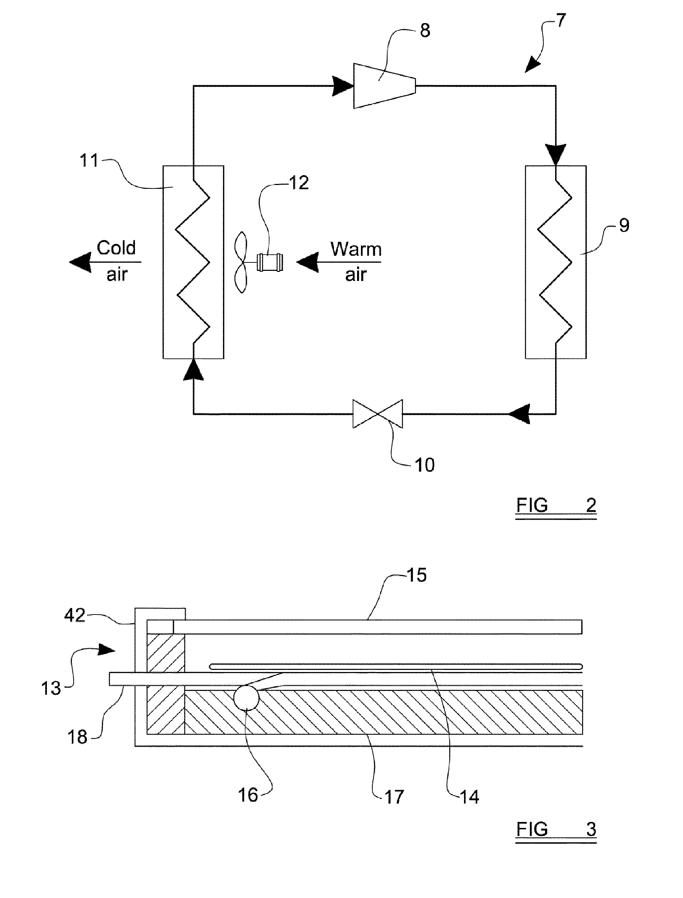

Figure 2 depicts a typical, single-stage vapor-compression system 7. Such systems typically have four components: a compressor 8, a condenser 9, an expansion device, such as a thermal expansion valve, (versions of which are called a throttle valve or Tx Valve or TxV) 10, and an evaporator 11.

Circulating refrigerant enters the compressor 8 as a saturated vapor and is compressed to a higher pressure and higher temperature. The hot, compressed vapor (superheated vapor) is routed through the condenser 9 where it is cooled and condensed into a liquid by flowing through a coil or tubes with cool water or cool air flowing across the coil or tubes. This is where the circulating refrigerant rejects heat from the system and the rejected heat is carried away by either the water or the air, whichever is used.

The condensed liquid refrigerant, in the form of a saturated liquid, is next routed through an expansion valve 10 where it undergoes an abrupt reduction in pressure. That pressure reduction results in an adiabatic flash evaporation of a part of the liquid refrigerant. The auto-refrigeration effect of the adiabatic flash evaporation lowers the temperature of the liquid and vapor refrigerant mixture so that it is colder than the temperature of the enclosed space to be refrigerated.

The cold mixture is then routed through the coil or tubes in the evaporator 11. A fan 12 circulates the warm air in the enclosed space across the coil or tubes carrying the cold refrigerant liquid and vapor mixture. That warm air evaporates the liquid part of the cold refrigerant mixture. At the same time, the circulating air is cooled and thus lowers the temperature of the enclosed space to the desired temperature. The evaporator 11 is where the circulating refrigerant absorbs and removes heat which is subsequently rejected in the condenser 9 and transferred elsewhere by the water or air used in the condenser 9.

To complete the refrigeration cycle, the refrigerant vapor from the evaporator again becomes a saturated vapor and is routed back into the compressor 8.

A standard air source heat pump is only capable of absorbing thermal energy from ambient air, and not capable of absorbing thermal energy from other sources or any other forms of energy, even if they are available, which may lead to wastage of such energy.

Both solar thermal collector and ASHP systems can be used for the purposes of DHW and SH, even though solar thermal collectors are mostly used for DHW and ASHP are mostly used for SH. In any case, each system is always used as an independent system and even when they are both used they are always used as two entirely separate systems.

As separate systems, they both lack performance when they are needed most. Solar thermal collectors do not work well when there is no sun, but that is also mostly likely when hot water is need most. ASHP systems do not work well when there is cold air, but that is also mostly likely when heating is most needed.

Furthermore, both systems are not standalone and they both require an auxiliary heater such as an electric, oil or gas heater, depending on given climate scenarios in the relevant location.

It is therefore an object of the present invention to provide an air source heat pump system which allows for greater energy absorption.

According to one aspect of the present invention there is provided an air source heat pump system comprising : tubing providing a refrigerant circuit; a compressor for compressing the refrigerant; a condenser for cooling the refrigerant; an expansion device configured to reduce the pressure of the refrigerant; a first evaporator part; a second evaporator part; and a receiver configured to connect the first evaporator part and the second evaporator part; wherein the receiver is configured to allow gas phase refrigerant to enter the first evaporator part from the receiver and liquid phase refrigerant to enter the second evaporator part from the receiver.

The system comprises two evaporator parts, allowing for more energy absorption through two different parts which may be located differently or configured to absorb different types of energy. The system uses a receiver as a reservoir of refrigerant to ensure a thermo-cycle can take place in the circuit. The provision of a receiver allows for a mechanism to ensure that there is always liquid refrigerant within the evaporator, so as to maximise energy absorption.

According to another aspect of the present invention there is provided a method for controlling refrigerant flow in an air source heat pump system comprising: tubing providing a refrigerant circuit; a compressor for compressing the refrigerant; an expansion device configured to reduce the pressure of the refrigerant; a first evaporator part; a second evaporator part; and a receiver configured to connect the first evaporator part and the second evaporator part, the method comprising: allowing gas phase refrigerant to enter the first evaporator part from the receiver and allowing liquid phase refrigerant to enter the second evaporator part from the receiver.

Preferably, at the first evaporator part, the refrigerant is evaporated substantially by thermal energy in the surrounding air; and at the second evaporator part, the refrigerant is evaporated substantially by thermal energy from a source other than thermal energy in the surrounding air. The first evaporator part may be a standard evaporator which is configured to absorb thermal energy from surrounding air, whereas the second evaporator may be configured to absorb energy from a different source.

This is advantageous because more energy may be absorbed through two different evaporator parts which may be located differently or configured to absorb different types of energy or energy from different sources.

In a preferred embodiment, the refrigerant is evaporated substantially by solar energy at the second evaporator part.

The addition of the solar evaporator has no negative effect on efficiency when running without solar assistance because the solar evaporator operates in parallel with the system and is completely bypassed in this mode.

In some embodiments, the receiver is a low pressure receiver. The receiver may be in the form of a vessel or any other form suitable for connecting the first evaporator part and the second evaporator part.

Preferably, the receiver comprises a liquid level sensor, which is capable of determining the level of liquid refrigerant in the receiver.

In some embodiments, the liquid level sensor comprises a low liquid level switch which is configured to respond to the liquid level reaching a pre-set low level and a high liquid level switch which is configured to respond to the liquid level reaching a pre-set high level.

In some preferred embodiments, the low liquid level switch is configured to trigger open the expansion device in response to the liquid level reaching a pre-set low level and the high liquid level switch is configured to trigger close the expansion device in response to the liquid level reaching a pre-set high level.

These system configurations ensure that the solar heat is utilised automatically and there is no need for extra refrigerant valves, sensors, pumps or complex software algorithms.

In some embodiments, the low liquid level switch is configured to trigger a warning signal transmission for under charging of refrigerant in response to the liquid level reaching a pre-set low level and the high liquid level switch is configured to trigger a warning signal transmission for over-charging of the refrigerant in response to the liquid level reaching a pre-set high level. This allows for a mechanism which can initiate alarms when the system is over charged or under charged, both of which conditions would reduce the efficiency of the system.

According to a further aspect of the present invention there is provided a solar air source heat pump system comprising: a solar thermal system which comprises tubing providing a heat transfer fluid circuit, a solar thermal collector where the heat transfer fluid absorbs solar energy, a storage tank for storing the heat transfer fluid, and a controller for controlling the solar thermal system; and an air source heat pump system as defined above.

Such solar air source heat pump systems would benefit from comprising an air source heat pump system due to its advantages as discussed above.

In some embodiments, the second evaporator part is located within the solar thermal collector. In such cases, the second evaporator part may be a solar evaporator, configured to absorb solar energy.

Additionally or alternatively, the first evaporator part may be located within the solar thermal collector. The provision of the first evaporator part in the solar collector ensures that the refrigerant in the first evaporator part is best placed to absorb thermal energy from warm air heated up by the sun in a location which has been chosen to maximise the amount of radiation received.

For a better understanding of the present invention and to show more clearly how it may be carried into effect reference will now be made, by way of example, to the accompanying drawings in which:

Figure 1 shows a typical solar thermal system in accordance with the prior art;

Figure 2 shows a typical ASHP system in accordance with the prior art;

Figure 3 is a schematic diagram of part of a solar thermal collector for use in the present invention;

Figure 4 is a simple schematic diagram showing an arrangement of tubing for a heat transfer fluid circuit and tubing for a refrigerant circuit within a solar thermal collector for use in the present invention;

Figure 5 shows a solar air source heat pump system for use in the present invention;

Figures 6a and 6b are graphs demonstrating a method for providing a defrost check in the system;

Figure 7 shows an alternative ASHP system for use in the present invention; and

Figure 8 shows an alternative solar air source heat pump system for use in the present invention.

In the following discussion, examples of an air source heat pump system comprising a first evaporator part and a second evaporator part which are connected by a receiver in accordance with embodiments of the present invention will be explained, together with examples of solar air source heat pump systems comprising such air source heat pump systems as well as a solar thermal system. Examples will be described in which the second evaporator part is a solar evaporator where the refrigerant is evaporated by solar energy, but it is to be understood that at the second evaporator, the refrigerant may be evaporated by solar energy, electric energy or any other suitable forms of energy. Furthermore, examples will be discussed in which the receiver is a low pressure receiver, but it is to be understood that the present invention is not limited to such receivers. Indeed, the present invention is applicable to any suitable means of connecting the first evaporator part and the second evaporator part and performing the relevant functions. In addition, the present invention is discussed in the context of domestic hot water and space heating provision, but it is to be understood that the present invention is also applicable to other types of structures such as industrial buildings.

Figure 3 shows the structure of a solar thermal collector integrated with refrigerant tubing of a heat pump in accordance with an embodiment of the present invention.

The solar thermal collector 13 of this embodiment may be a flat plate collector. It may comprise an absorber sheet 14 for absorbing solar energy, a transparent cover 15 such as a glass cover which allows solar energy to pass through but reduces heat losses, an HTF to remove heat from the absorber through tubing for an HTF circuit 16, a heat insulating backing 17 and a frame 42.

The absorber sheet 14 may be made of thermally stable polymers, aluminium, steel or copper, to which a matte black or selective coating is applied. In a preferred embodiment, the absorber sheet 14 comprises a continuous absorber sheet, enabling heat transfer over the whole collector area. Both refrigerant and water/glycol can use the whole collector area at different times.

In one embodiment, the HTF may be provided by water. In a preferred embodiment, glycol or any other suitable antifreeze may be added to water to prevent frost.

The solar thermal collector 13 of the present invention also comprises tubing for a refrigerant circuit 18. In one embodiment of the present invention, the tubing for a refrigerant circuit 18 in the solar thermal collector 13 acts as a secondary evaporator for the ASHP.

In this embodiment of the present invention, the outer appearance and handling of the collector 13 remains similar to the currently available solar thermal collectors. Consequently, this means currently available standard parts can be used in implementing the present invention. Furthermore, similar hydronics also means that standard parts can be easily mounted in the structure of the present invention.

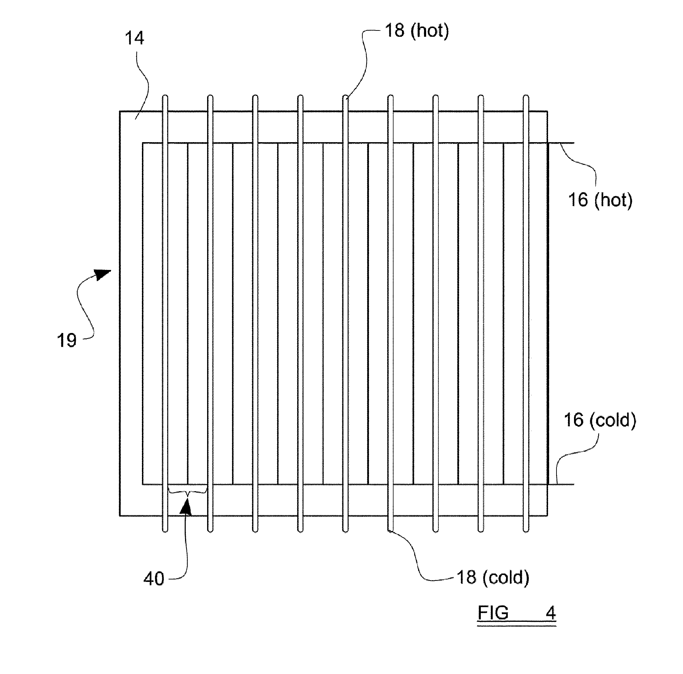

Figure 4 shows more clearly the tubing for an HTF circuit 16 and the tubing for a refrigerant circuit 18 over the collector area 19 in accordance with an embodiment of the present invention.

As shown in Figure 4, the collector comprises of a continuous absorber sheet14, enabling heat transfer over the whole of the collector area 19 together with refrigerant tubing arrays 18 and water/glycol tubing arrays 16.

In a preferred embodiment, both refrigerant tubing arrays 18 and water/glycol tubing arrays 16 are evenly distributed throughout the absorber assembly. Thus each tubing 16 or 18 is able to interact with the whole of the solar collector 13 efficiently when they are required to operate.

The provision of refrigerant tubing 18 in a solar collector 13 facilities the combination of a solar thermal system and an air source heat pump system and allows the refrigerant to collect solar energy as well as heat energy. This helps the system to boost the coefficient of the power of the ASHP.

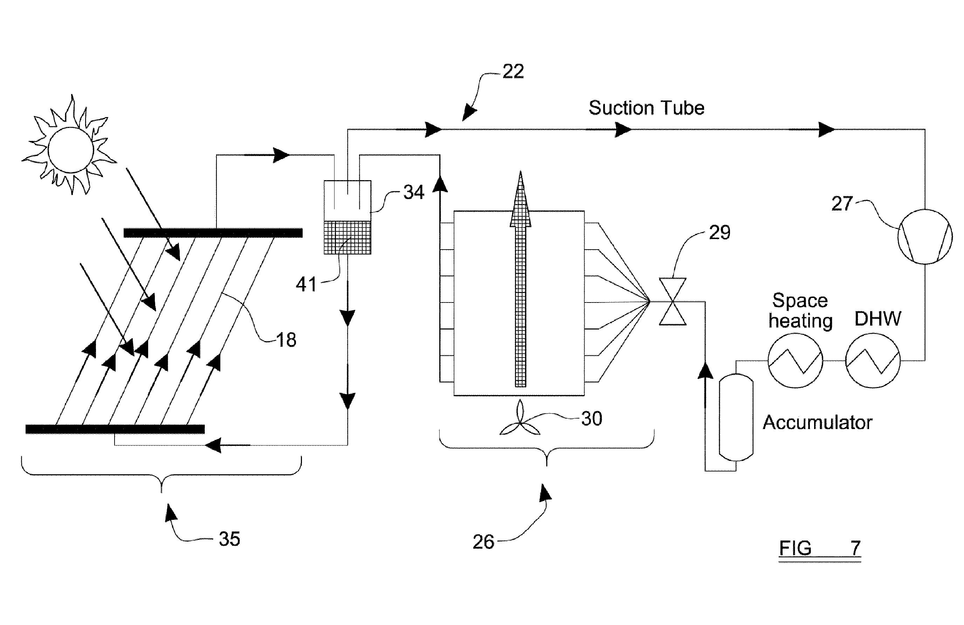

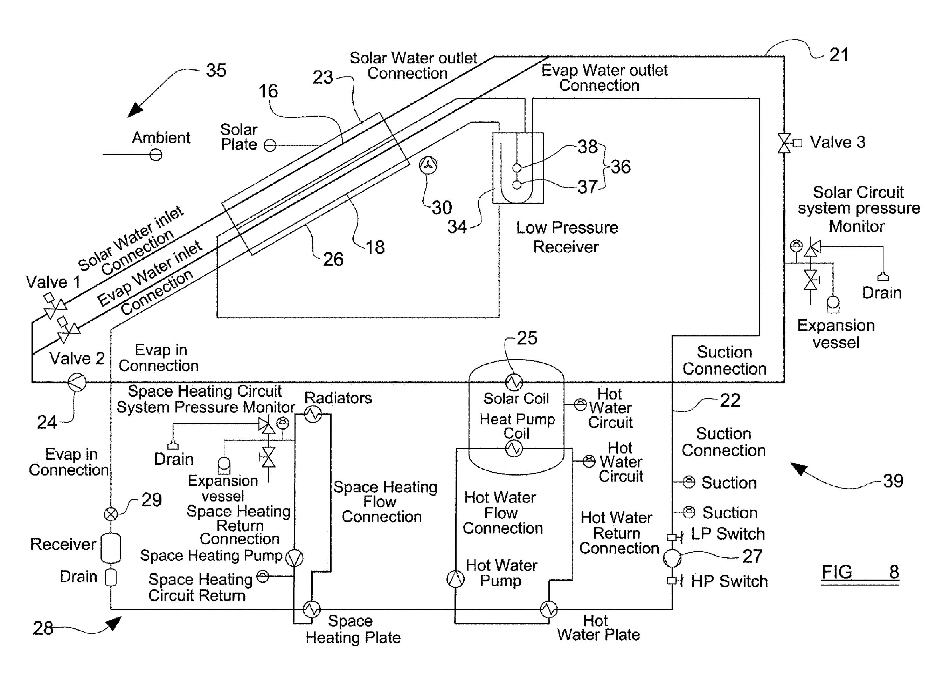

Furthermore, the provision of refrigerant tubing 18 in a solar collector 13 ensures that the refrigerant is best placed to absorb heat from warm air heated up by the sun in a location which has been chosen to maximise the amount of radiation received. In particular, the inclusion of refrigerant tubing 18 in the solar collector 13 permits utilisation of radiant heat energy in the ASHP operating mode for example for SH, as explained hereinafter in relation to Figures 7 and 8. This may happen when there is SH demand and the levels of solar radiation are insufficient to bring the solar collector water temperature up to a temperature higher than the stored water or when the solar collected water temperature has reached its set point.

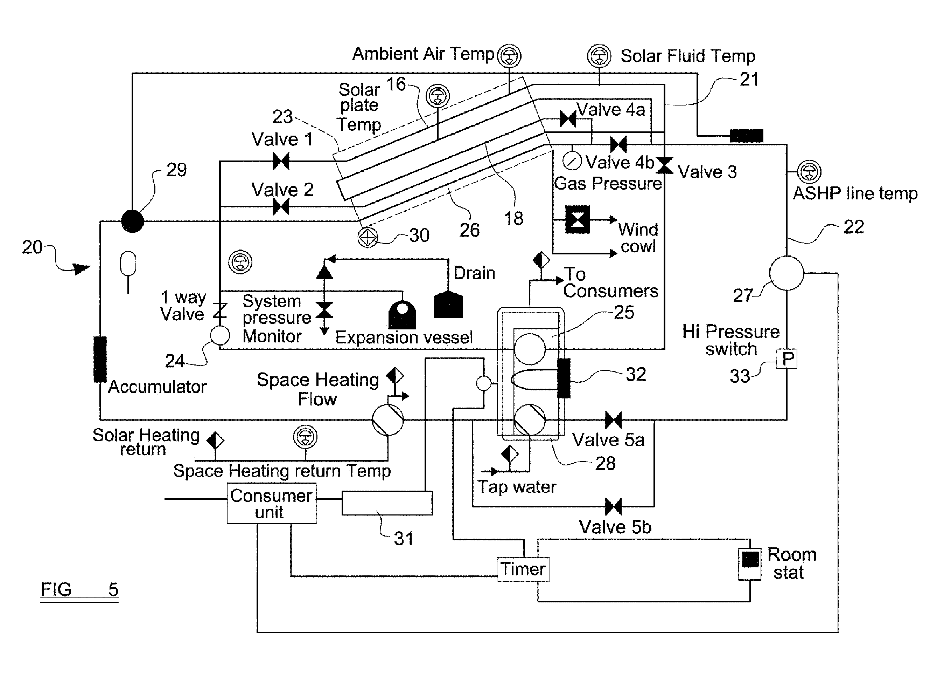

Figure 5 shows a solar air source heat pump system 20 which is a combined system of a solar thermal system 21 and an air source heat pump system 22 in accordance with a first configuration of the present invention.

Any standard solar thermal system and any standard air source heat pump system may be used for this combination. In a similar manner to standard solar thermal systems, the solar thermal system 21 of the combined system 20 comprises a solar collector 23, a circulating pump 24, and a storage tank 25. In a similar manner to standard ASHP systems, the ASHP system 22 of the combined system 20 comprises of an air source evaporator 26, a compressor 27, a condenser 28, a (thermal) expansion device 29 (such as a valve, for example a throttle valve), and a fan 30.

As can be seen from Figure 5, in this embodiment of the present invention, the air source evaporator 26 is located close to the solar collector 23. It is advantageous to place the air source evaporator 26 sufficiently close to the solar collector 23 such that the refrigerant can absorb heat from surrounding air which is located to be effectively heated by the sun. This is because the solar thermal collector 23 is typically placed to maximise the amount of radiation received, and such locations receive the maximal amount of sunshine, so the air in such locations also tends to be relatively warmer compared to other available locations where the solar thermal collector may have been placed. In a preferred embodiment as shown in Figures 3 and 4, the air source evaporator 26 is located within the solar collector 23, so that it is best placed for the refrigerant to absorb heat from warm air heated up by the sun in a location which has been chosen to maximise the amount of radiation received.

The controller 31 of the system 20 controls both the solar thermal system 21 and the ASHP system 22. Furthermore, the condenser 28 of the ASHP system 22 is provided at the storage tank 25 of the solar thermal system 21, possibly within the storage tank 25 of the solar thermal system 21. These features contribute to simplifying the combined system, reducing costs, and further integrating the solar thermal system and the ASHP system of the present invention.

The system 20 may operate in five different modes, which are "Off / System Fault Mode", "Solar Only Mode", "Solar and ASHP Mode", "ASHP Only Mode" and "ASHP Defrost Mode". Entry and exit from the different modes may be decided by the system controller 18.

In addition to selecting the correct mode of operation, the controller 31 may preferably evaluate whether there is sufficient energy input to meet the heating and hot water demands. If more energy is being used than being replaced then an auxiliary heating source 32, such as an immersion heater, may be enabled to allow the system to cope with demand. In one embodiment, if the ambient temperature outside is less than a defined set point, the auxiliary heating source 32 can be turned on if there is a demand for SH.

The Off/ System Fault Mode may be entered when the system 20 is turned off or a fault has occurred. The mode has been designed to prevent damage over the full range of environmental conditions expected for the system. In one configuration of this mode, the compressor 27, the pump 24 and the fans 30 are all turned off. Furthermore, valves 1, 2, 5a, 5b are open, the (thermal) expansion device 29 is operating, and valve 3 is closed.

The Solar Only Mode may be entered when the storage tank 25 temperature is less than the solar collector 23 temperature and also less than a predetermined first threshold (which may be varied if desired). This allows the system 20 to store energy when it is readily available from the solar collector 23 regardless of whether there is heating or hot water demand at the time. This mode uses the least amount of electrical power as only a water pump 24 is energised.

In one configuration of this mode, the compressor 27 and the fans 30 are turned off and the pump 24 is turned on. Furthermore, valves 1, 3, 4a, 4b, 5a, 5b are open, (thermal) expansion device 29 is operating, and valve 2 is closed.

When the storage tank 25 temperature reaches the solar collector 23 temperature or an upper limit of the predetermined first threshold, the system 20 may exit the Solar Only Mode. The upper limit of the predetermined first threshold may be set, for example, at 95°C.

In the Solar and AHSP Mode, the refrigerant is passed through the solar collector 23 to gain additional heat when, for example, there is timed demand for heating or hot water. The system 20 may enter the Solar and AHSP Mode, when the solar collector 23 temperature is greater than the ambient temperature plus a second predetermined threshold (which may be varied). The predetermined second threshold may be set, for example, at 15°C. This mode uses available solar energy to boost the coefficient of power of the ASHP.

In one configuration of this mode, the compressor 27 is turned on, the pump 24 is off and the fans 30 are under speed control. Furthermore, valves 1, 2, 3 and 4b are closed, valve 4a is open, (thermal) expansion device 29 is operating, and the three way valve bypass 5a and 5b may be closed or open depending on heating conditions.

The system 20 may exit the Solar and AHSP Mode when there is no demand for heating or hot water, or when the heat generated is less than the temperature of the water in the storage tank 25. For example, the system may exit this mode when the solar collector 23 temperature is no longer greater than the ambient temperature plus a predetermined third threshold (which may be varied). The predetermined third threshold may be set, for example, at 2°C.

When there is demand for heating or hot water and the solar collector 23 temperature is no greater than the ambient temperature, the system may enter the ASHP Only Mode. In one configuration of this mode, the compressor 27 and the fans 30 are turned on and the pump 24 is off. Furthermore, valves 1, 2, 3 and 4a are closed, valve 4b is open, the three way valve bypass 5a and 5b may be closed or open depending on heating conditions, and (thermal) expansion device 29 is operating as normal.

The system 20 may exit the ASHP Only Mode when there is no more demand for heating or hot water, or when the high pressure switch 33 or any other critical alarm is activated, or when the solar collector 23 temperature is greater than the ambient temperature plus a predetermined fourth threshold (which may be varied).

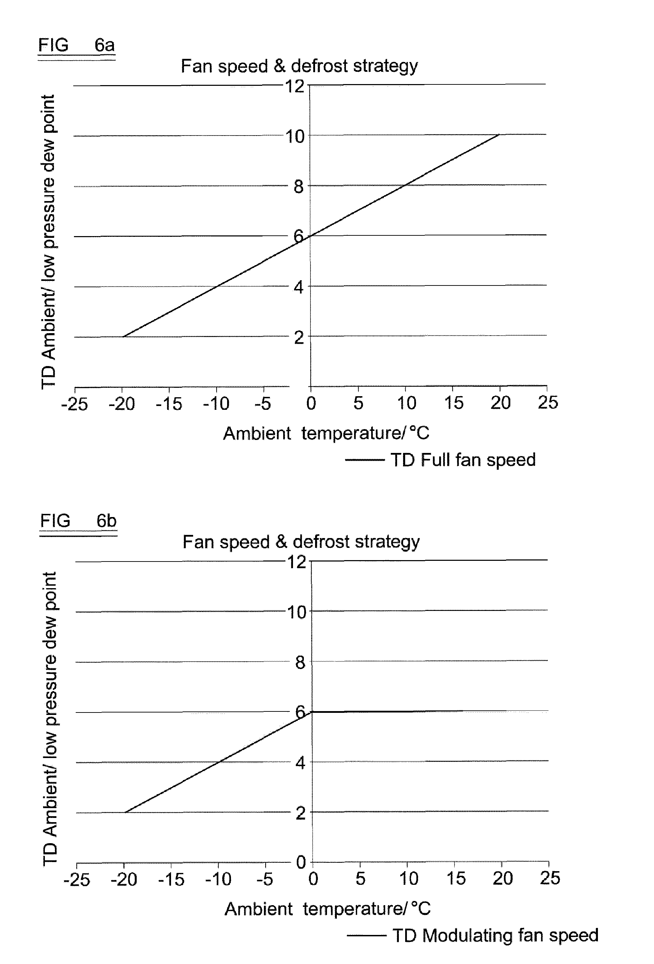

The system 20 may provide for a defrost check. As shown in Figures 6a and 6b, TD ambient/low pressure dew point at TD modulating fan speed may indicate frost conditions. To defrost, the system 20 may enter the ASHP Defrost Mode. In one configuration of this mode, the compressor 27 and the fans 30 are turned off and the pump 24 is on. Furthermore, valves 1, 4a, 4b are closed, (thermal) expansion device 29 is not operating, and valves 2, 3, 5a, and 5b are open.

The combination of these two systems 21 and 22 means they both can contribute energy to the thermal storage in the storage tank 25.

Additionally, the ASHP system 22 in the present invention can absorb heat from warm air in the solar collector 23, leading to improved performance when the weather is cold but sunny, or when the weather is warm but not sunny such as cloudy or raining. When the weather is cold but sunny, the solar thermal system 21 of the present invention would work better, whereas when the weather is warm but not sunny, the ASHP system 22 of the present invention would work better. In such conditions, the overall amount of renewable energy is higher using the combined system 20 of the present invention, leading to higher efficiency.

Figure 7 shows an alternative ASHP system 22 configuration in accordance with the present invention. In this alternative configuration, valves 4a and 4b in the configuration of Figure 5 have been replaced by a low pressure receiver 34. In this configuration, the ASHP system 22 is provided with a solar evaporator part 35 in addition to an air source evaporator part 26. The solar evaporator part 35 is connected to the air source evaporator part 26 by the low pressure receiver 34. In one embodiment, the low pressure receiver 34 may be in the form of a vessel.

Uniform liquid refrigerant feed is achieved by the low pressure receiver 34 placed between air source evaporator part 26 and solar evaporator part 35. The low pressure receiver 34 separates any gas from the refrigerant leaving the first evaporator 26, while gas is directly fed to the compressor 27 and the remaining liquid is fed to the solar evaporator part 35 to absorb solar heat. The resulting gaseous refrigerant re-enters the low pressure receiver 34 to be separated again before proceeding to the compressor 27.

Superheating of the refrigerant within the proposed installation can be controlled by the liquid level inside the low pressure receiver 34. In this configuration, the design of the system 39 is such that a liquid level sensor 36 within the low pressure receiver 34 controls the superheat settings of an electronic expansion valve 29. In a preferred embodiment, the liquid level sensor 36 comprises two level switches: a low liquid level switch 37 and a high level switch 38.

This ensures that there is always liquid refrigerant 41 within the solar evaporator.

When solar radiation energy is available, the refrigerant will evaporate naturally in the heat and create a thermo-siphon effect. This will start to lower the level of refrigerant within solar evaporator 35, which will in turn trigger the low liquid level switch 37 within the low pressure receiver 34. This will effectively open the electronic expansion valve 29, allowing a little more refrigerant through and effectively improving the efficiency of the system.

When the amount of solar radiation energy reduces, the reverse occurs.

The system 39 uses a low pressure receiver 34 as a reservoir of refrigerant to ensure a thermo-cycle can take place in the circuit. This simple but elegant control method ensures that the solar heat is utilised automatically and there is no need for extra refrigerant valves, sensors, pumps or complex software algorithms.

The provision of the evaporator 35 in a location where there is sufficient sunlight for the evaporation of the refrigerant within the evaporator 35, together with the provision of a low pressure receiver 34, creates a secondary solar evaporator 35 for the ASHP system 22 of the present invention, and thus allows the refrigerant to collect solar energy from the sun and transfer into another medium such as water/glycol. The system 39 uses solar energy to drive the evaporator 35 and 26 and condensing cycle to transfer heat energy which helps to boost the coefficient of the power of the ASHP.

Additionally or alternatively, it is advantageous to place the air source evaporator 26 sufficiently close to in a location where there is sufficient sunlight such that the refrigerant can effectively absorb heat from surrounding air which is heated by the sun.

Furthermore, the addition of the solar evaporator 35 has no negative effect on efficiency when running without solar assistance because the solar evaporator 35 operates in parallel with the system and is completely bypassed in this mode.

Figure 8 shows an alternative solar air source heat pump system 39 configuration of an embodiment of the present invention incorporating the alternative ASHP system 22 shown in Figure 7.

In this embodiment, the evaporator 35 is located sufficiently close to the solar collector 23 in order to create a secondary solar evaporator 35 for the ASHP system 22 to ensure receipt of sufficient solar energy to drive the evaporator 35 and 26 and condensing cycle to transfer heat energy. This is because the solar thermal collector 23 is typically placed to maximise the amount of radiation received. In a preferred embodiment, the evaporator may be located with the solar collector 23, so that it is best placed for the refrigerant to absorb solar energy in a location which has been chosen to maximise the amount of radiation received.

Additionally or alternatively, it is advantageous to place the air source evaporator 26 sufficiently close to the solar collector 23 such that the refrigerant can effectively absorb heat from surrounding air which is heated by the sun. This is because the solar thermal collector 23 is typically placed to maximise the amount of radiation received, so the air in such locations also tends to be relatively warmer comparing to other available locations where the solar thermal collector may have been placed.

In a similar manner to the configuration shown in Figure 5, the system 39 may also operate in the same five different modes, which are "Off / System Fault Mode", "Solar Only Mode", "Solar and ASHP Mode", "ASHP Only Mode" and "ASHP Defrost Mode".

In particular, the system may enter the Solar Only Mode if there is a demand for heat and sun is available. In a similar manner to a standard solar thermal collector, in this mode the solar collector 23 absorbs heat and the heat is carried to the thermal storage 25 by water/glycol. In the Solar and ASHP Mode, the refrigerant is used to collect energy from the sun and transfer the energy into another medium such as water/glycol. The refrigerant is partly evaporated in ASHP-circuit, thus contributing to the SH-loop.

Additionally or alternatively, it is also possible to use the liquid level switches 37 and 38 within the low pressure receiver 34 to initiate alarms to warn of potential under or over charging of refrigerant. Because either of these conditions would reduce the efficiency of the system 22, this mechanism serves to improve efficiency of the system 22.

In one embodiment, the liquid level sensor 36 monitors the liquid level in the low pressure receiver 34. When a pre-set low level of refrigerant is reached in the low pressure receiver, a warning signal for under charging is transmitted. When a pre-set high level of refrigerant is reached, a warning signal for over-charging is transmitted.

In an alternative embodiment, in regulating the amount of refrigerant as explained above, normally a low level of refrigerant triggers open the electronic expansion valve, letting more refrigerant through. When no refrigerant flows in, or it takes too long for the refrigerant to come through under such circumstances, a warning signal for under charging may be transmitted. Similarly, in regulating the amount of refrigerant as shown above, normally a high level of refrigerant triggers close the electronic expansion valve, letting less refrigerant through gradually reducing the level of refrigerant in the low pressure receiver 34. When there is no reduction in the level of refrigerant in the low pressure receiver 34 or it takes too long to reduce the amount of the refrigerant under such circumstances, a warning signal for over-charging may be transmitted.

## Claims

1. An air source heat pump system comprising: tubing providing a refrigerant circuit (18); a compressor (27) for compressing the refrigerant; a condenser (28) for cooling the refrigerant; an expansion device (29) configured to reduce the pressure of the refrigerant; a first evaporator part (26); a second evaporator part (35); and a receiver (34) configured to connect the first evaporator part and the second evaporator part; wherein the receiver is configured to allow gas phase refrigerant to enter the first evaporator part from the receiver and liquid phase refrigerant to enter the second evaporator part from the receiver.

2. A system as claimed in claim 1, wherein the receiver is a low pressure receiver (34).

3. A system as claimed in claim 1 or 2, wherein the receiver (34) comprises a liquid level sensor (36) which is capable of determining the level of liquid refrigerant in the receiver.

4. A system as claimed in claim 3, wherein the liquid level sensor (36) comprises a low liquid level switch (37) which is configured to respond to the liquid level reaching a pre-set low level and a high liquid level switch (38) which is configured to respond to the liquid level reaching a pre-set high level.

5. A system as claimed in claim 4, wherein the low liquid level switch (37) is configured to trigger open the expansion device (29) in response to the liquid level reaching a pre-set low level and the high liquid level switch (38) is configured to trigger close the expansion device in response to the liquid level reaching a pre-set high level.

6. A system as claimed in claim 4 or 5, wherein the low liquid level switch (37) is configured to trigger a warning signal transmission for under charging of refrigerant in response to the liquid level reaching a pre-set low level and the high liquid level switch (38) is configured to trigger a warning signal transmission for over-charging of the refrigerant in response to the liquid level reaching a pre-set high level.

7. A solar air source heat pump system comprising: a solar thermal system (21) which comprises tubing providing a heat transfer fluid circuit (16), a solar thermal collector (13, 23) where the heat transfer fluid absorbs solar energy, a storage tank (25) for storing the heat transfer fluid, and a controller (31) for controlling the solar thermal system; and an air source heat pump system (22) as claimed in any preceding claim.

8. A system as claimed in claim 7, wherein the second evaporator part (35) is located within the solar thermal collector (13, 23).

9. A system as claimed in claim 8, wherein the second evaporator part (35) is a solar evaporator, configured to absorb solar energy.

10. A system as claimed in claim 7, 8 or 9, wherein the first evaporator part (26) is located within the solar thermal collector (13, 23).

11. A method for controlling refrigerant flow in an air source heat pump system comprising: tubing providing a refrigerant circuit (18); a compressor (27) for compressing the refrigerant; an expansion device (29) configured to reduce the pressure of the refrigerant; a first evaporator part (26); a second evaporator part (35); and a receiver (34) configured to connect the first evaporator part and the second evaporator part, the method comprising: allowing gas phase refrigerant to enter the first evaporator part from the receiver and allowing liquid phase refrigerant to enter the second evaporator part from the receiver.

12. A method according to claim 11, wherein the refrigerant is evaporated at the first evaporator part (26) substantially by thermal energy in the surrounding air; and the refrigerant is evaporated at the second evaporator part (35) substantially by thermal energy from a source other than thermal energy in the surrounding air.

13. A method according to claim 12, wherein the refrigerant is evaporated at the second evaporator part (35) substantially by solar energy.

14. A method according to any one of claims 11 to 13 and including the step of monitoring refrigerant level in the receiver (34) such that, when said level reaches a pre-determined low level, the expansion device (29) is opened to increase the level of refrigerant in the receiver, and, when the level reaches a pre-determined high level, the expansion device is closed to reduce the level of refrigerant in the receiver.

15. A method according to any one of claims 11 to 14 and including the step of monitoring refrigerant level in the receiver (34) such that, when the level reaches a pre-determined low level, a signal is transmitted indicating under charging of refrigerant, and, when the level reaches a pre-determined high level, a signal is transmitted indicating over charging of refrigerant.
